# EUROPÄISCHE PATENTSCHRIFT

(11) **EP 2 122 095 B1**
(45) Veröffentlichungstag und Bekanntmachung des Hinweises auf die Patenterteilung: **06.11.2013**
(21) Anmeldenummer: 07815173.5
(22) Anmeldetag: 09.11.2007
(51) Int. Cl.: E05F 5/00, A47B 88/04, F16F 9/12

(54) **DÄMPFER**
DAMPER
AMORTISSEUR

(30) Priorität: 11.01.2007 AT 522007
(43) Veröffentlichungstag der Anmeldung: 25.11.2009
(73) Patentinhaber: Julius Blum GmbH, 6973 Höchst (AT)
(72) Erfinder: KRAMMER, Bernhard, A-6973 Höchst (AT)
(74) Vertreter: Hofinger, Stephan
(86) Internationale Anmeldenummer: PCT/AT2007/000506
(87) Internationale Veröffentlichungsnummer: WO 2008/083417

(56) Entgegenhaltungen:
- EP-A- 0 538 605
- EP-A- 0 807 741
- DE-U1- 20 221 066
- US-A- 5 598 607
- US-A1- 2002 096 405
- US-A1- 2004 144 604

## Beschreibung

Die vorliegende Erfindung betrifft einen Dämpfer für relativ zueinander bewegbare Möbelteile und/oder Möbelbeschlagbauteile eines Möbelbeschlags mit den Merkmalen des Oberbegriffs des Patentanspruchs 1.

Beim Stand der Technik ist es bekannt, bei Möbeldämpfern relativ aufwendige Ventilkonstruktionen zu realisieren, um am Ende des Dämpfungshubes einen Rückstellhub zu ermöglichen, an dessen Ende das Betätigungselement bzw. der Dämpfer und seine Dämpfungsbauteile wieder die Ausgangsposition für den nächsten Dämpfungshub eingenommen haben. Diese ventilartigen Konstruktionen erlauben ein Rückströmen des Dämpfungsmediums und damit ein Rückstellen der Dämpfungsbauteile. In der Regel sind diese ventilartigen Konstruktionen aber sehr aufwendig in Konstruktion und Fertigung und erlauben nur sehr geringe Toleranzen.

In der US 2002/0096405 A1 und in der US 2004/0144604 A1 sind jeweils Dämpfvorrichtungen mit einer Freilaufstellung und mit einer Arretierstellung beschrieben, wobei beim Dämpfungshub ein Dämpfungsbauteil an einem Halteteil des Dämpfers angedrückt und somit in dieser Drehlage arretiert wird, wobei eine Bremskraft durch eine Relativbewegung der beiden Dämpfungsbauteile zueinander generiert wird. Beim Rückstellen des Dämpfers wird hingegen das Dämpfungsbauteil vom Halteteil abgehoben, sodass sich die beiden Dämpfungsbauteile miteinander verdrehen können, wobei also keine Relativbewegung zwischen den Dämpfungsbauteilen stattfindet und folglich auch keine Bremskraft generiert wird. Das Einsetzen der Dämpfung erfolgt bei diesen Konstruktionen aufgrund der Trägheitsmasse des zu arretierenden Dämpfungsbauteiles mit einem zeitlichen Versatz.

In der US 5,598,607 ist eine Dämpfvorrichtung für einen Pianodeckel oder für den Deckel eines Laptops beschrieben, wobei in Schließrichtung eine Dämpfung und in Öffnungsrichtung ein Freilauf ohne Bremswirkung realisiert ist. Beim Dämpfungshub wird eine Dämpfung durch Reibung herbeigeführt, wobei federbelastete Rollen in einem zwischen einem Rotor und einem Halteteil gebildeten Spalt eingepresst werden und dadurch einen Drehzapfen an einer Umdrehung hemmen. Durch den Einfluss der Haftreibungskraft kommt es bei solchen Dämpfern zu Unstetigkeiten in der Kraftübertragung und damit zu einem sprunghaften Ansprechen der Dämpfvorrichtung auf äußere Kräfte. Zudem reagiert der Dämpfer aufgrund der sphärischen Oberfläche der Kugeln insbesondere bei einem Wechsel der Drehrichtung mit einem zeitlichen Versatz.

Aufgabe der Erfindung ist es daher, einen Dämpfer der eingangs erwähnten Gattung unter Vermeidung obiger Nachteile anzugeben.

Dies wird erfindungsgemäß durch die Merkmale des Patentanspruchs 1 gelöst.

Der Halteteil wird in den gezeigten Ausführungsbeispielen vom Dämpfergehäuse oder von einem zentralen Zapfen gebildet.

Hierdurch wird erreicht, dass ein unmittelbares Einsetzen des Dämpfungshubes bei einer entsprechenden Betätigung des Betätigungselementes sichergestellt wird. Die Dämpfungsbauteile und das Betätigungselement können am Ende des Rückstellhubes ihre Ausgangsposition für den Dämpfungshub erreichen, ohne dass die Dämpfungsbauteile und das Dämpfungsmedium über aufwendige Ventilkonstruktionen ein Rückströmen bzw. eine Rückstellung ermöglichen müssen. Gemäß einer Grundidee der Erfindung ist nämlich vorgesehen, dass die Dämpfungsbauteile, zwischen denen das Dämpfungsmedium wirkt bzw. angeordnet ist, während des Rückstellhubes In Ihrer Relativposition zueinander verharren können. Dies wird ermöglicht, Indem ein Freilauf vorgesehen ist, der den Rückstellhub ermöglicht, ohne dass dazu die Dämpfungsbauteile des Dämpfers relativ zueinander bewegt werden müssen.

Dies ermöglicht eine besonders einfache und damit kostengünstige Bauart des Dämpfers mit wenigen und vergleichsweise einfachen Bauteilen. Darüber hinaus kann durch den Verzicht auf aufwendige Ventilkonstruktionen in der Regel mit großen Durchflussquerschnitten gearbeitet werden, wodurch sich nur sehr geringe, leicht zu realisierende Toleranzanforderungen ergeben.

Besonders günstig ist die Erfindung in Dämpfern umsetzbar, bei denen zumindest eines der beiden Dämpfungsbauteile so gelagert ist, dass es während des Dämpfungshubes, vorzugsweise ausschließlich, eine Rotationsbewegung relativ zum anderen Dämpfungsbauteil ausführt. Solche Dämpfer werden häufig als Rotationsdämpfer bezeichnet. Technisch besonders einfach zu realisierende erfindungsgemäße Dämpfer sehen dabei vor, dass das Betätigungselement so gelagert ist, dass es während des Dämpfungshubes und/oder während des Rückstellhubes, vorzugsweise ausschließlich, eine Rotationsbewegung ausführt. Im Sinne einer besonders einfachen Konstruktion kann dann vorgesehen sein, dass das Betätigungselement und zumindest einer der, vorzugsweise alle, Dämpfungsbauteile um eine gemeinsame Rotationsachse drehbar gelagert sind und/oder dass das Betätigungselement und die Dämpfungsbauteile eine während des Betriebs des Dämpfers untrennbare Baueinheit bilden, wobei diese Baueinheit zur Montage an nur einem der relativ zueinander bewegbaren Möbelteile und/oder Möbelbeschlagbauteile vorgesehen ist.

Für den Freilauf ist eine Arretiereinnchtung mit einer Arretierstellung und einer Freilaufstellung vorgesehen. In der Arretierstellung bzw. beim Dämpfungshub kann die Arretiereinrichtung dann einen der Dämpfungsbauteile und oben genanntes Dämpfergehäuse miteinander arretieren. In der Freilaufstellung der Arretiereinrichtung ist dann vorgesehen, dass die Arretiereinrichtung die genannten, vorher miteinander arretierten Bauteile für eine Relativbewegung zueinander freigibt.

Um ein möglichst sofortiges Einsetzen des Dämpfungshubes bei einer entsprechenden Betätigung des Betätigungselementes sicherzustellen, ist die Sperrklinke der Arretiereinrichtung in Richtung ihrer Arretierstellung mittels eines Federelementes vorgespannt.

Bei erfindungsgemäßen Dämpfern können grundsätzlich alle beim Stand der Technik bekannten Dämpfungsmedien, wie zum Beispiel Silikonöle u. dgl. eingesetzt werden. Besonders günstig eingesetzt werden können die erfindungsgemäßen Dämpfer aber mit Dämpfungsmedien, die zumindest zeitweise eine sehr hohe Viskosität bzw. Zähigkeit aufweisen. Dies verringert dann auch die bei den relativ dünnflüssigen Silikonölen bekannten Dichtungsprobleme. Besonders bevorzugt kommen sogenannte dilatante Medien bzw. Fluide zum Einsatz. Bei diesen handelt es sich um Medien, deren Zähigkeit mit steigender Schergeschwindigkeit zunimmt. Dieses Verhalten liegt dabei günstigerweise in einem für bewegliche Möbelteile und deren Beschläge üblichen Arbeitsbereich mit Winkelgeschwindigkeiten zwischen 0 und 1200°/sec, vorzugsweise 0 und 600°/sec, bzw. die Lineargeschwindigkeiten zwischen 0 und 100 mm/sec, vorzugsweise zwischen 0 und 50 mm/sec, vor. Besonders günstige Dämpfungsmedien sind dabei borhaltige Polysiloxane, die zumindest in einer Näherung ein entsprechendes Verhalten zeigen. Sie bestehen in der Regel aus linearen Dimethylpolysiloxanen, die an jedem dritten bis hundertsten Si-Atom eine Si-O-B-Bindung tragen. Im Handel werden diese Medien unter dem Handelsnamen "Bouncing Putty" verkauft. Diese Medien vereinigen zwei grundsätzlich verschiedene Eigenschaften in sich. Bei langsamer Beanspruchung zeigen sie sich als plastisch viskose Masse, die beim Stehenlassen zerfließt. Bei stoßartig auftretenden Kräften verhalten sie sich jedoch wie ein hochelastischer Körper. Die Verwendung solcher Medien, die bei Scherbeanspruchung mit einer ersten Schergeschwindigkeit, vorzugsweise plastisch und/oder viskos, zerfließen und bei einer, vorzugsweise stoßartigen, Scherbeanspruchung mit einer zweiten, gegenüber der ersten höheren, Schergeschwindigkeit vorwiegend elastisch reagieren, hat den Vorteil, dass auf sehr einfache Konstruktionen der Dämpfungsbauteile, zwischen denen das Dämpfungsmedium angeordnet ist, zurückgegriffen werden kann. Dies ist möglich, da das Dämpfungsmedium selbst bereits eine an die von außen eingetragenen Kräfte angepasste Reaktion erzeugt. So ist die Dämpfungs- bzw. Verzögerungswirkung bei nur geringen und langsam auftretenden, von außen angreifenden, Kräften gering und nimmt aufgrund der Eigenschaften, insbesondere aufgrund der zunehmenden Zähigkeit, des Mediums bei einer sehr schnellen Erhöhung der von außen eingetragenen Kräfte von alleine zu, ohne dass hierfür beim Stand der Technik bekannte aufwendige Ventilkonstruktionen mit sich verändernden Durchströmöffnungsquerschnitten od. dgl. notwendig wären.

Die erfindungsgemäßen Dämpfer mit Freilauf können aber auch für sogenannte newtonsche Medien bzw. Fluide, welche einem linearen Fließgesetz folgen, eingesetzt werden.

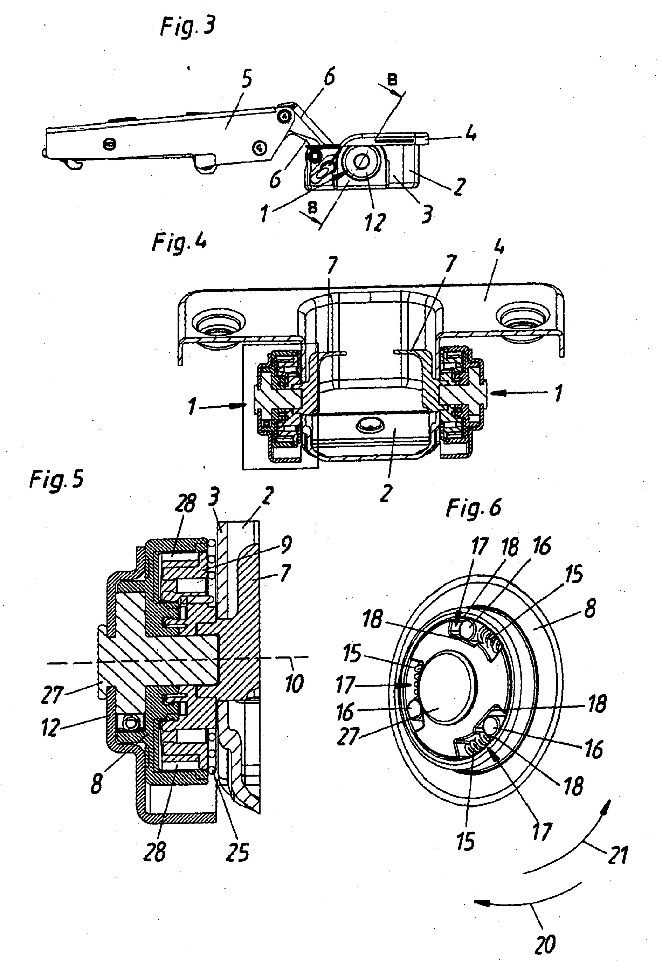

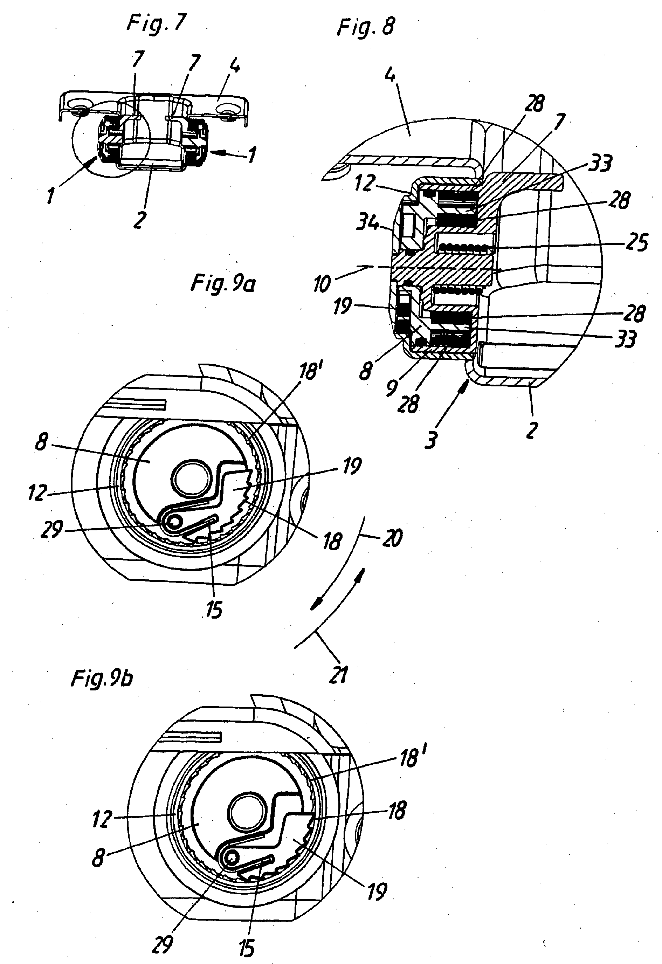

Im Folgenden werden nun verschiedene Ausführungsbeispiele von Dämpfern und ihre Anordnung und Verwendung bei verschiedenen Möbelbeschlägen anhand der beigelegten Figuren erläutert. Fig. 3-6, Fig. 10-11, Fig. 12-13, Fig. 14-16, Fig. 17-17a und Fig. 18-19 dienen der allegemeinen Erläuterung, während das erfindungsgemäße Ausführungsbeispiel in den Fig. 7-9b dargestellt ist. Dabei zeigen:
- Die Fig. 1 bis 3: eine Anordnung von Dämpfern am Scharniertopf eines Möbelscharniers,
- die Fig. 4 bis 6: Detaildarstellungen zu einer ersten solchen Realisierungsform,
- die Fig. 7 bis 9b: das erfindungsgemäße Ausführungsbeispiel,
- die Fig. 10 bis 13: ein drittes, nicht-erfindungsgemäßes Ausführungsbeispiel,
- die Fig. 14 bis 19: eine viertes nicht-erfindungsgemäßes Ausführungsbeispiel,
- die Fig. 20 und 21: mögliche Ausführungsvarianten der das Dämpfungsmedium einschließenden Dämpfungsbauteile,
- die Fig. 22a und 22b: Ablaufkurven eines Betätigungselementes an verschiedenen Gelenkhebeln eines Möbelscharniers,
- die Fig. 23 bis 31: zwei verschiedene Möglichkeiten der Verwendung eines erfindungsgemäßen Dämpfers für Schubladenführungen und
- die Fig. 32 und 33: den Einsatz eines erfindungsgemäßen Dämpfers bei einem Stellarmgelenk für eine Hochfaltklappe.

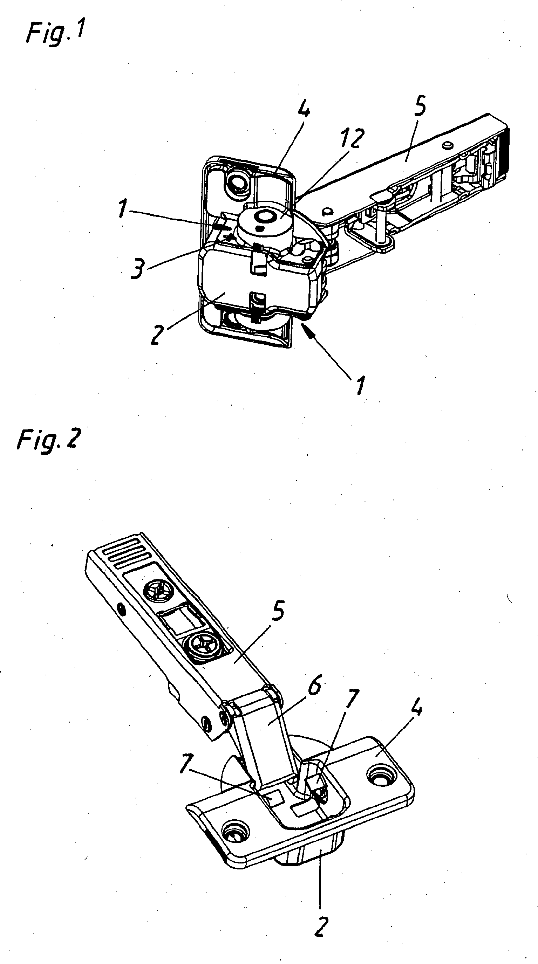

Die Fig. 1 bis 3 zeigen - wie an sich bekannt - ein Möbelscharnier mit Scharnierarm 5 und Scharniertopf 2 als Anschlagteile, welche über zwei Gelenkhebel 6 miteinander schwenkbar verbunden sind. In der Ansicht von unten gemäß Fig. 1 ist eine besonders bevorzugte Montageart eines erfindungsgemäßen Dämpfers 1 am Möbelscharnier gezeigt. Dieser sitzt in Montagestellung unterhalb des Befestigungsflansches 4 des Scharniertopfes 2 an dessen seitlicher Außenwand 3. Bei den gezeigten Ausführungsbeispielen sind jeweils zwei in solcher Art angeordnete Dämpfer vorgesehen. Diese können samt Scharniertopf 2 in einem Standardmontageloch für den Scharniertopf im Möbelteil versenkt werden. Im montierten Zustand sind dann nur noch die beiden im Inneren des Scharniertopfes 2 angeordneten schwenkbaren Betätigungselemente 7 des Dämpfers zu sehen. Dies ist eine besonders Platz sparende und unauffällige Art und Weise, den Dämpfer am Möbelscharnier unterzubringen. Fig. 3 zeigt diese Ausführungsart in einer Seitenansicht.

Die Fig. 4 bis 6 zeigen eine nicht-erfindungsgemäße Ausgestaltungsform, wie der Freilauf realisiert werden kann. Zur Erläuterung sind in Fig. 4 und vergrößert in Fig. 5 jeweils Schnitte durch die Dämpfer 1 dargestellt. Fig. 6 zeigt in einer perspektivischen Draufsicht die bei diesem Ausführungsbeispiel zum Einsatz kommende Variante einer Arretiereinrichtung zur Realisierung des Freilaufs. Das Betätigungselement 7 wird beim relativen Verschwenken des Scharniertopfes 2 zum Scharnierarm 5 vom äußeren Gelenkhebel 6 beaufschlagt, was in einer Rotationsbewegung des Betätigungselementes 7 um die gemeinsame Rotationsachse 10 resultiert. Bei dieser Rotationsbewegung nimmt das Betätigungselement 7 den drehfest mit ihm verbundenen zweiten Dämpfungsbauteil 9 mit. Zwischen dem zweiten Dämpfungsbauteil 9 und dem ersten Dämpfungsbauteil 8 ist ein ringförmiger Freiraum 28 für das Dämpfungsmedium geschaffen, sodass dieses zwischen den beiden Dämpfungsbauteilen 8 und 9 wirkt. Das erste Dämpfungsbauteil 8 ist relativ zum zweiten Dämpfungsbauteil 9 rotierbar um die gemeinsame Rotationsachse 10 gelagert. Der erste Dämpfungsbauteil 8 ist über einen Freilauf mit dem Dämpfergehäuse 12 verbunden. Das Dämpfergehäuse 12 und damit auch der zentrale Zapfen 27 sind wiederum drehfest am Scharniertopf 2 fixiert. Die den Freilauf in diesem Ausführungsbeispiel ermöglichende Arretiereinrichtung ist in einer perspektivischen Seitenansicht in Fig. 6 besonders gut gezeigt. Dabei ist das drehfest mit dem zentralen Zapfen 27 verbundene Dämpfergehäuse 12 weggelassen, um die Arretiereinrichtung sehen zu können. Diese weist drei zylinderförmige Klemmkörper 16 auf. Diese sind jeweils in sich in Richtung 21 verengenden Führungsnuten 17 geführt und mittels der Schraubenfedern 15 in Richtung 21 vorgespannt. Sobald sich der Dämpfungsbauteil 8 in Richtung 21 gegen das Gehäuse 12 bzw. den zentralen Zapfen 27 verdreht, werden die Klemmkörper 16, vorgespannt durch die Feder 15, in Richtung Verengung der Führungsnut 17 zwischen deren Kontaktoberflächen 18 eingeklemmt, wodurch der Dämpfungsbauteil 8 am zentralen Zapfen 27 arretiert wird. Dies ist beim Dämpfungshub der Fall, sodass im Ergebnis dann der drehfest mit dem Betätigungselement 7 verbundene zweite Dämpfungsbauteil 9 gegen den so arretierten ersten Dämpfungsbauteil 8 verdreht wird. Hierdurch wirken auf das im Freiraum 28 angeordnete Dämpfungsmedium Scherkräfte, die die Dämpfungswirkung hervorrufen. Im Falle der Verwendung von dilatanten Dämpfungsmedien nimmt die Zähigkeit bzw. Viskosität und damit die Dämpfungswirkung mit zunehmender Schergeschwindigkeit im Dämpfungsmedium zu. Am Ende des Dämpfungshubes befindet sich das Scharnier in einer hier nicht explizit gezeigten, aber beim Stand der Technik bekannten Schließstellung. Wird das Scharnier durch Verschwenken der daran befestigten Möbelteile wieder in die in Fig. 3 dargestellte Öffnungsstellung zurückbewegt, so erfolgt der Rückstellhub, bei dem das Betätigungselement 7 und der damit verbundene zweite Dämpfungsbauteil 9 durch die Rückstellfeder 25 wieder in seine Ausgangsstellung zurückgedreht wird. Dabei ermöglicht der vorab beschriebene Freilauf, dass sich der erste Dämpfungsbauteil 8 mit dem zweiten Dämpfungsbauteil 9 mitbewegt, was besonders bei dilatanten, gegebenenfalls beim vorhergehenden Dämpfungshub gehärteten, Medien oder hochviskosen Medien besonders vorteilhaft ist. Beim Rückstellhub werden durch entsprechendes Verdrehen des ersten Dämpfungsbauteils 8 gegen den zentralen Zapfen 27 bzw. das Gehäuse 12 die Klemmkörper 16 in Richtung 20 geschoben, wodurch ein Verdrehen zwischen dem Zapfen 27 und dem ersten Dämpfungsbauteil 8 und damit ein Freilauf möglich ist.

In dem erfindungsgemäßen Ausführungsbeispiel gemäß der Fig. 7 bis 9b ist anstelle der vorab geschilderten Klemmkörpervariante eine Arretiereinrichtung mit einer mittels Feder 15 vorgespannten Sperrklinke 19 vorgesehen. Wie im Schnitt in den Fig. 7 und 8 gezeigt, wirkt auch diese Arretiereinrichtung zwischen dem ersten Dämpferbauteil 8 und dem Gehäuse 12. Dies bedeutet, dass bei dem den Rückstellhub ermöglichenden Freilauf der erste Dämpferbauteil 8 zusammen mit dem zweiten Dämpferbauteil 9 und dem Betätigungselement 7 durch Rotieren um die gemeinsame Rotationsachse 10 relativ zum Gehäuse 12 zurückrotiert werden kann. Für diesen Rückstellhub ist wiederum die Rückstellfeder 25 vorgesehen. In diesem Ausführungsbeispiel ist das Betätigungselement 7 einstückig mit dem zweiten Dämpferbauteil 9 ausgeführt. Als Besonderheit ist noch darauf hinzuweisen, dass das Dämpfungsmedium in diesem Ausführungsbeispiel in zwei konzentrisch zueinander angeordneten, aber voneinander im Wesentlichen getrennten ringförmigen Freiräumen 28 angeordnet ist. Diese werden zum einen von einer im Querschnitt im Wesentlichen U-förmigen Wandung des zweiten Dämpferbauteils 9 und zum anderen von einer in diesem Freiraum eingeführten Zwischenwand 33 des ersten Dämpferbauteils 8 gebildet. Diese Variante zeigt beispielhaft, wie die für den Kontakt mit dem Dämpfungsmedium vorgesehenen Oberflächen 23 und 24 durch ein Mehrkammersystem vergrößert werden können. In diesem Sinne können auch noch mehr als zwei Freiräume 28 vorgesehen sein. Die Fig. 9a und 9b zeigen in einer Seitenansicht die Sperrklinke 19 mit ihrer durch Verzahnung charakterisierten Kontaktoberfläche 18 sowie die am Gehäuse 12 vorgesehene Gegenverzahnung 18'. Um diese Draufsicht zu ermöglichen, ist der Deckel 34 des Gehäuses 12 in diesen beiden Figuren weggelassen. Die Sperrklinke 19 ist um die Schwenkachse 29 schwenkbar gelagert und mittels des Federelementes 15 in Richtung der in Fig. 9b gezeigten Arretierstellung vorgespannt. Wird das erste Dämpferbauteil 8 und die damit drehfest verbundene Sperrklinke 19 in Richtung 20 gegen das Dämpfergehäuse 12 verdreht, so werden die Zähne der Verzahnung 18 aufgrund ihrer Formgebung aus der Verzahnung 18' gegen die Vorspannung des Federelementes 15 herausgehoben, wodurch ein Freilauf in diese Richtung für den Rückstellhub realisiert ist. Bei Drehung in die entgegengesetzte Richtung 21 hingegen greifen die Zähne der Kontaktoberfläche 18 der Sperrklinke 19 so in die Gegenverzahnung der Kontaktoberfläche 18' des Gehäuses 12 ein, dass der erste Dämpferbauteil 8 in seiner Lage relativ zum Gehäuse 12 fixiert ist, sodass sich beim Dämpfungshub das Betätigungselement 7 und der einstückig daran angeformte zweite Dämpferbauteil 9 um die gemeinsame Rotationsachse 10 gegen den ersten Dämpferbauteil 8 verdrehen, wodurch es mittels des in Freiräumen 28 vorgesehenen Dämpfungsmediums zur Dämpfung der Bewegung kommt.

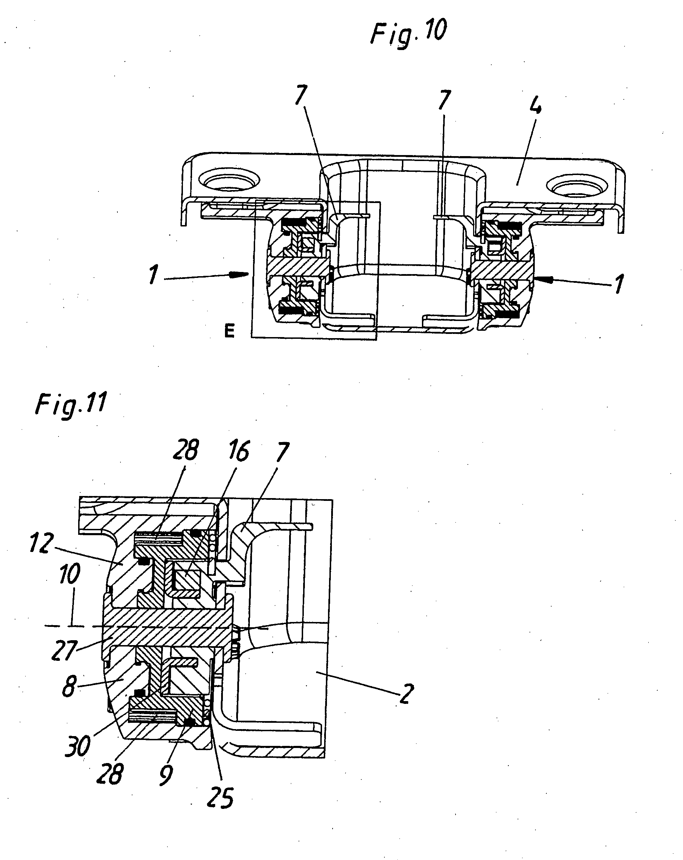

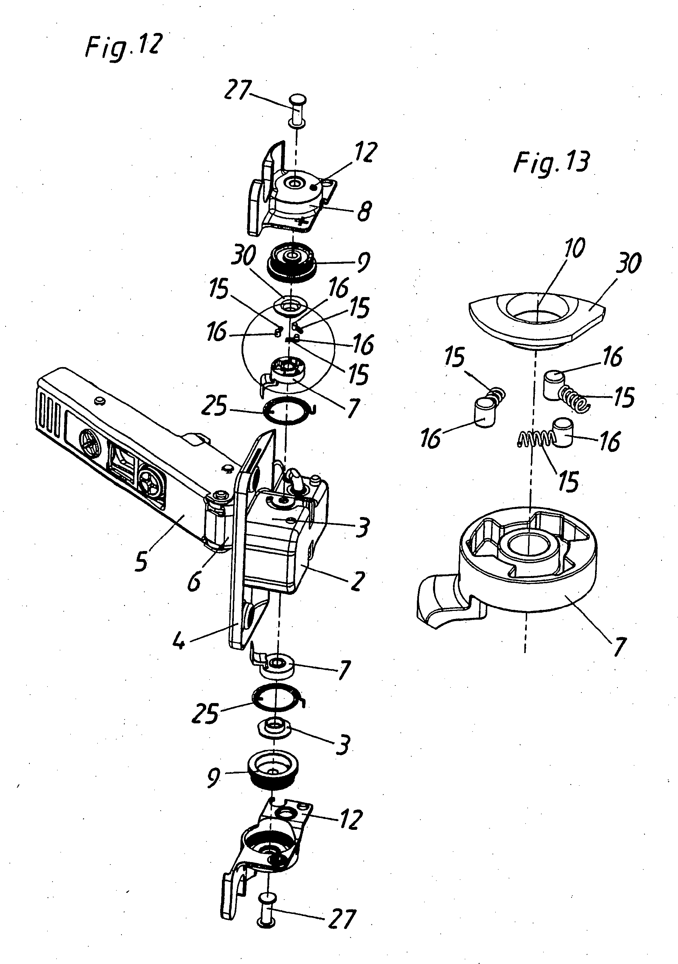

In den bisher geschilderten Ausführungsbeispielen ist der Freilauf immer derart ausgebildet, dass sich der erste Dämpferbauteil 8 und der zweite Dämpferbauteil 9 gemeinsam mit dem Betätigungselement 7 beim Rückstellhub bewegen können. In den Fig. 10 bis 13 ist nun eine nicht-erfindungsgemäße Ausführungsvariante gezeigt, bei der der Freilauf zwischen dem Betätigungselement 7 und einem fix mit dem zweiten Dämpfungsbauteil 9 verbundenen Zusatzring 30 angeordnet ist und wirkt. In diesem Ausführungsbeispiel ist der Freilauf mittels einer Arretiereinrichtung mit Klemmkörpern 16, wie sie im Prinzip in der Fig. 6 gezeigt ist, vorgesehen. Die Klemmkörper 16 arretieren das Betätigungselement 7 mit dem zweiten Dämpferbauteil 9 beim Dämpfungshub und geben das Betätigungselement 7 für den Rückstellhub mittels Rückstellfeder 25 frei. In diesem Ausführungsbeispiel ist der erste Dämpferbauteil 8 einstückig mit dem Gehäuse 12 ausgeführt. Die Fig. 12 zeigt in einer Explosionsdarstellung die Einzelteile der an der Außenwand 3 des Scharniertopfes 2 angeordneten Dämpfer gemäß der Fig. 10 und 11. Fig. 13 zeigt ebenfalls in einer Explosionsdarstellung noch einmal im Detail die einzelnen Bauteile der Arretiereinrichtung dieses Ausführungsbeispiels.

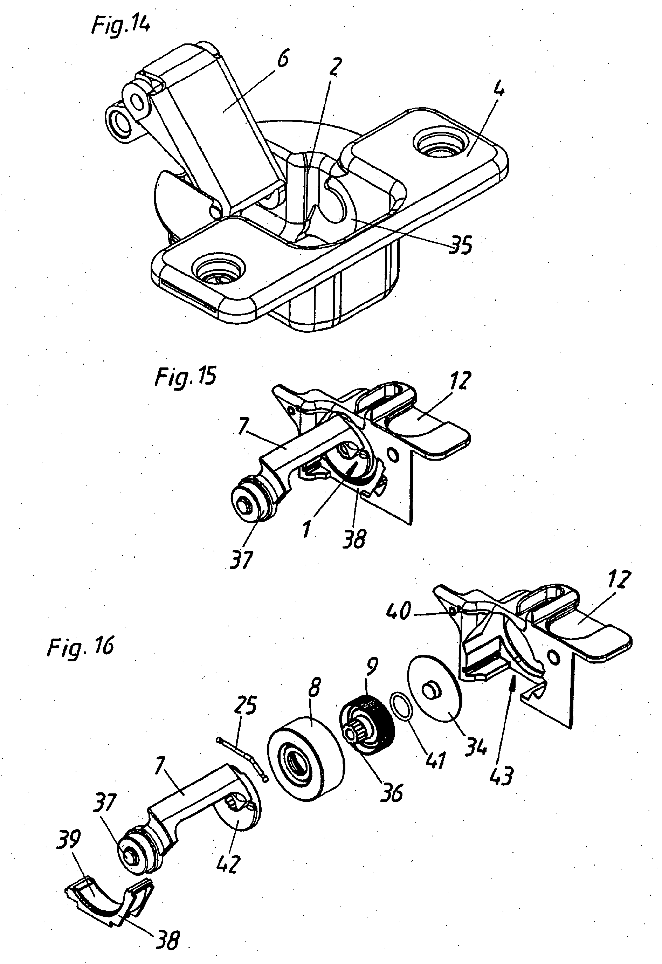

Ein viertes nicht-erfindungsgemäßes Ausführungsbeispiel wird anhand der Fig. 14 bis 19 erläutert. Fig. 14 zeigt zunächst einen Scharniertopf 2, für den der Dämpfer 1 in diesem Beispiel konzipiert ist. Auch hier ist vorgesehen, dass der Dämpfer 1 seitlich an der Außenwand 3 des Scharniertopfes 2 unterhalb des Befestigungsflansches 4 montiert ist. In der perspektivischen Ansicht gemäß Fig. 14 ist die Ausnehmung 35 in der seitlichen Außenwand 3 des Scharniertopfes 2 gezeigt, durch die das Betätigungselement 7 im montierten Zustand in das Innere des Scharniertopfes 2 hineinragt. Fig. 15 zeigt die wesentlichen Teile des Dämpfers 1 Im zusammengesteckten Zustand. Fig. 16 zeigt eine Explosionsdarstellung der einzelnen Bauteile. Ein erster Unterschied zu den vorab beschriebenen Ausführungsbeispielen ist, dass bei dieser Variante nur ein Dämpfer 1 vorgesehen ist. Bei solchen Ausführungsformen ist es im Sinne einer besseren Abstützung des Betätigungselementes 7 günstig, auf der den Dämpfungsbauteilen 8 und 9 entgegen gesetzten Seite des Betätigungselementes 7 eine Lagerwalze 37 vorzusehen, die in einer entsprechenden Ausnehmung des Scharniertopfes 2 gelagert ist. Hierdurch werden weniger Momente auf die Lagerung des Dämpfers 1 übertragen. Die zweite besonders wesentliche Änderung gegenüber den bisher diskutierten Ausführungsbeispielen ist, dass hier die Arretiereinrichtung eine Bremsbacke 38 aufweist, an der eines der beiden Dämpfungsbauteile 8 und 9 (hier der erste Dämpfungsbauteil 8) in der Arretierstellung durch Anliegen an der Bremsbacke 38 arretierbar ist. In der Freilaufstellung ist das Dämpfungsbauteil so von der Bremsbacke 38 beabstandet, dass es relativ zur Bremsbacke 38 bewegbar ist.

In der Explosionsdarstellung gemäß Fig. 16 ist zunächst einmal die Aussparung 43 im Dämpfergehäuse 12 zu sehen, in der die Dämpfungsbauteile 8 und 9 im montierten Zustand mit Spiel gelagert sind. Im Gehäuse 12 ist darüber hinaus eine Nut 40 für die Verankerung der Rückstellfeder 25 angeordnet. Die Bremsbacke 38 trägt den Bremsbelag 39 und ist im montierten Zustand in den Führungsnuten 44 des Dämpfergehäuses 12 gelagert. Dies hat zur Folge, dass die Bremsbacke 38 die Aussparung 43 zumindest teilweise begrenzt.

Das nicht in der Nut 40 gelagerte Ende der Rückstellfeder 25 ist in einer Nut einer einstückig mit dem Betätigungselement 7 verbundenen Führungsscheibe 42 gehalten. Die Führungsscheibe 42 trägt eine Innenverzahnung, in die eine Außenverzahnung 36 des zweiten Dämpferbauteils 9 eingreift. Das Betätigungselement 7 und das zweite Dämpferbauteil 9 sind dadurch drehfest miteinander verbunden und können beide beim Dämpfungshub eine Rotationsbewegung relativ zum ersten Dämpferbauteil 8 ausführen. Das Dämpfungsmedium ist wiederum zwischen den beiden Dämpferbauteilen 8 und 9 wirksam. Zur Abdichtung sind ein Dichtring 41 sowie der Deckel 34 vorgesehen.

Bei diesem nicht-erfindungsgemäßen Ausführungsbeispiel ist somit vorgesehen, dass beim Dämpfungshub das Betätigungselement 7 den zweiten Dämpfungsbauteil 9 relativ zum ersten Dämpfungsbauteil 8 verdreht, womit über das Dämpfungsmedium die Dämpfung der Bewegung hervorgerufen wird. Während des Dämpfungshubes wird der erste Dämpfungsbauteil 8 gegen den Bremsbelag 39 der Bremsbacke 38 gedrückt und dadurch in seiner Stellung arretiert. Beim Dämpfungshub wird darüber hinaus die Rückstellfeder 25 gespannt. Sobald das Betätigungselement 7 im Anschluss an den Dämpfungshub wieder freigegeben wird, leitet die Rückstellfeder 25 den Rückstellhub ein. Dabei wird der erste Dämpfungsbauteil 8 nicht mehr gegen die Bremsbacke 38 gedrückt und kann dadurch gemeinsam mit dem Betätigungselement 7 und dem zweiten Dämpfungsbauteil 9 beim Rückstellhub in die Ausgangsposition zurückdrehen, womit wiederum der Freilauf realisiert ist. Der Bremsbelag 39 bzw. die Bremsbacke 38 wie auch die Außenfläche des ersten Dämpfungsbauteils 8 können in Abweichung des hier gezeigten Ausführungsbeispiels auch eine Oberflächenverzahnung oder eine anderweitig geartete mechanische Verankerung für den Dämpfungshub vorsehen.

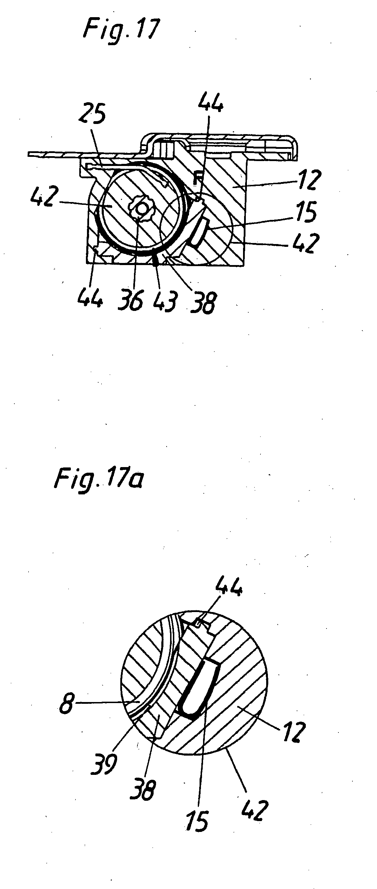

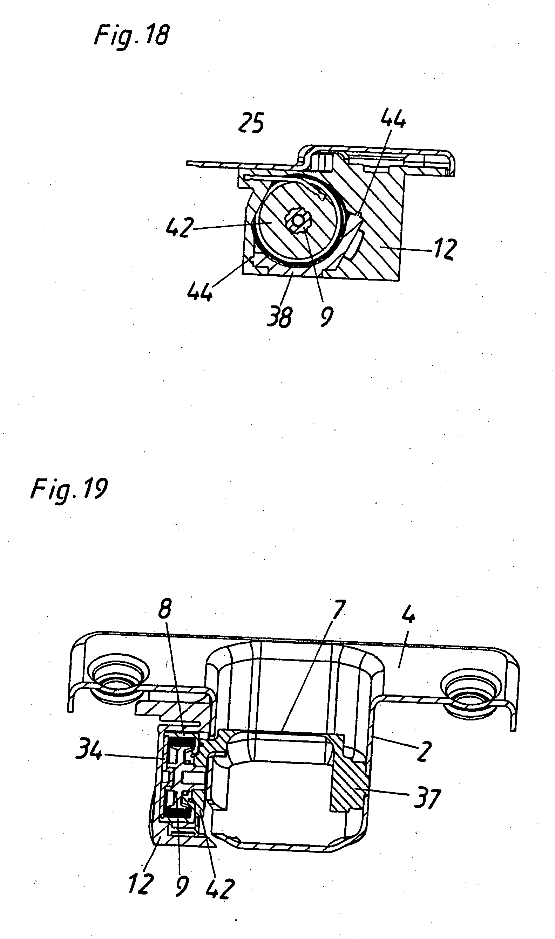

Fig. 17 zeigt, wie bei diesem nicht-erfindungsgemäßen Ausführungsbeispiel eine Vorspannung der Bremsbacke 38 in Richtung der Arretierstellung realisiert werden kann. Hierfür ist das Federelement 15 vorgesehen. Dieses drückt, wie im Detail besser im Ausschnitt 42 gemäß Fig. 17a zu sehen, die Bremsbacke 38 in Richtung des ersten Dämpfungsbauteiles 8. Um eine Bewegung zuzulassen, weisen die Führungsnuten 44 in dieser Ausführungsform ein gewisses Spiel auf, sodass sich die Bremsbacke 38 relativ zu dem Gehäuse 12 bewegen kann. In Fig. 18 ist das ansonsten gleiche Ausführungsbeispiel ebenfalls in einer Schnittdarstellung, aber ohne Vorspannung der Bremsbacke 38 gezeigt. Die Führungsnuten 44 lassen hier keine Bewegung der Bremsbacke 38 in Richtung des Dämpfungsbauteiles 8 zu. Sie ist somit in ihrer Lage relativ zum Gehäuse 12 fixiert. Das Federelement 15 kann dabei dann natürlich entfallen. Bei dieser Variante wird das erste Dämpfungsbauteil 8 durch die Beaufschlagung des Betätigungselementes 7 so an die Bremsbacke 38 beim Dämpfungshub gedrückt, dass eine Arretierung stattfindet, ohne dass hierfür eine Vorspannung vorgesehen wäre.

Fig. 19 zeigt noch einen weiteren Schnitt durch den Scharniertopf 2 und den Dämpfer 1 gemäß einem nicht-erfindungsgemäßen Ausführungsbeispiel. Besonders gut zu erkennen ist hier die Lagerung der Lagerwalze 37 im Scharniertopf 2 sowie das Ineinandergreifen der Dämpfungsbauteile 8 und 9.

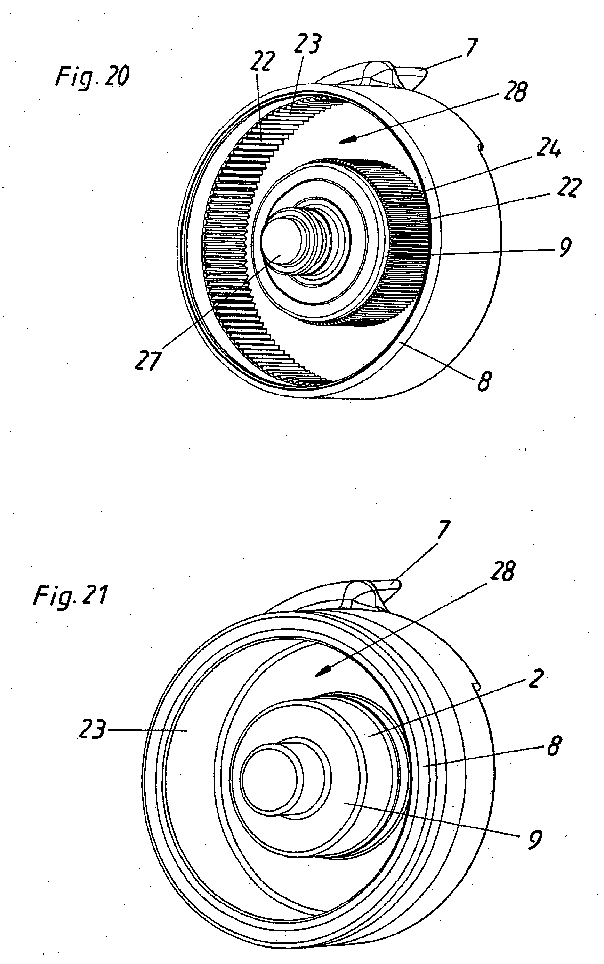

Die Fig. 20 und 21 zeigen Beispiele, wie die für den Kontakt mit dem Dämpfungsmedium vorgesehenen Oberflächen 23 und 24 ausgestaltet sein können. In dem Ausführungsbeispiel gemäß Fig. 20 sind für einen innigen Kontakt mit dem Dämpfungsmedium Rillen bzw. Zähne 22 vorgesehen. Diese können natürlich auch durch beliebig anderes ausgeformte Erhebungen oder Vertiefungen, wie Noppen od. dgl. oder aufgeraute Oberflächen, ersetzt oder ergänzt werden. Besonders wenn borhaltiges Polysiloxan als Dämpfungsmedium eingesetzt wird, können aber auch an sich makroskopisch glatte Silikonoberflächen 23 und 24 für den Kontakt mit dem Dämpfungsmedium vorgesehen sein, wie dies beispielhaft in Fig. 21 gezeigt ist. In diesem Sinne kann allgemein Gleiches mit Gleichem gepaart werden, indem zumindest einer der, vorzugsweise beide, Dämpfungsbauteile 8, 9 eine dasselbe Material oder gleiche Materialkomponenten wie das Dämpfungsmedium aufweisende, für den Kontakt mit dem Dämpfungsmedium vorgesehene Oberfläche 23, 24 aufweist.

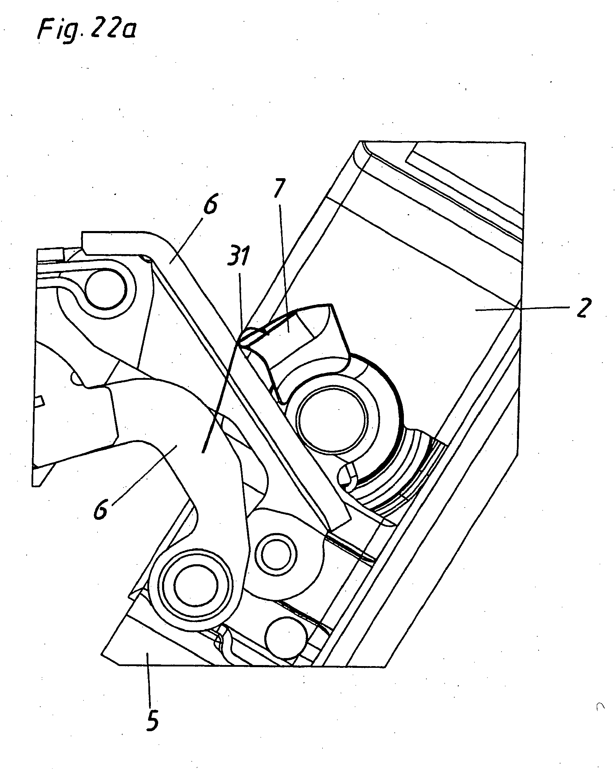

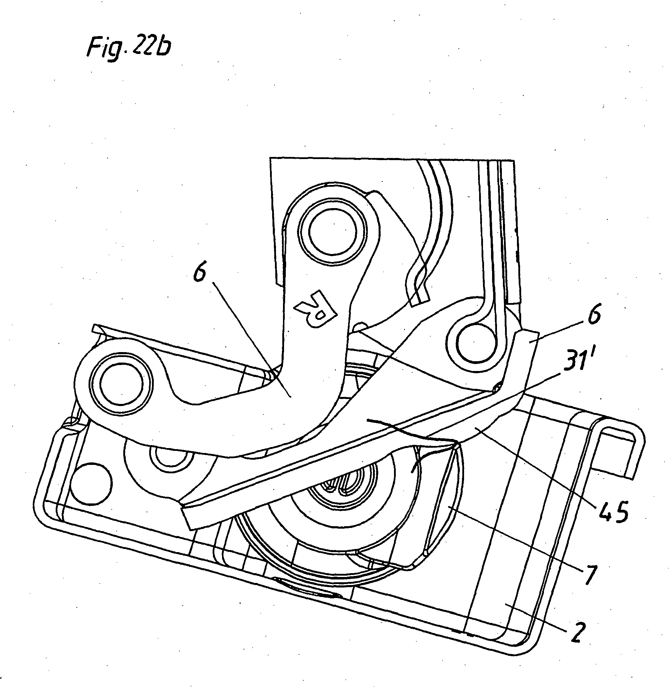

In Fig. 22a ist eine Ablaufkurve 31 des Berührungspunktes zwischen Außenhebel 6 und Betätigungselement 7 in einem Schnitt durch den Scharniertopf 2 dargestellt. Aus der Ablaufkurve 31 ist ersichtlich, dass der Abstand zum Drehpunkt des Betätigungselementes 7 nicht konstant sein muss und durch die Art der Ausführung des Betätigungselementes 7 bzw. des Außenhebels 6 die Dämpfungs- und Übertragungseigenschaften des Dämpfers weiter beeinflussbar sind. Dies ist beispielhaft mit der Ablaufkurve 31' in Fig. 22b gezeigt. Bei dieser Ausführungsform trägt der Gelenkhebel 6 eine Kontur 45, mittels der der Verlauf der Ablaufkurve 31' gegenüber dem Ausführungsbeispiel aus Fig. 22a modifiziert ist.

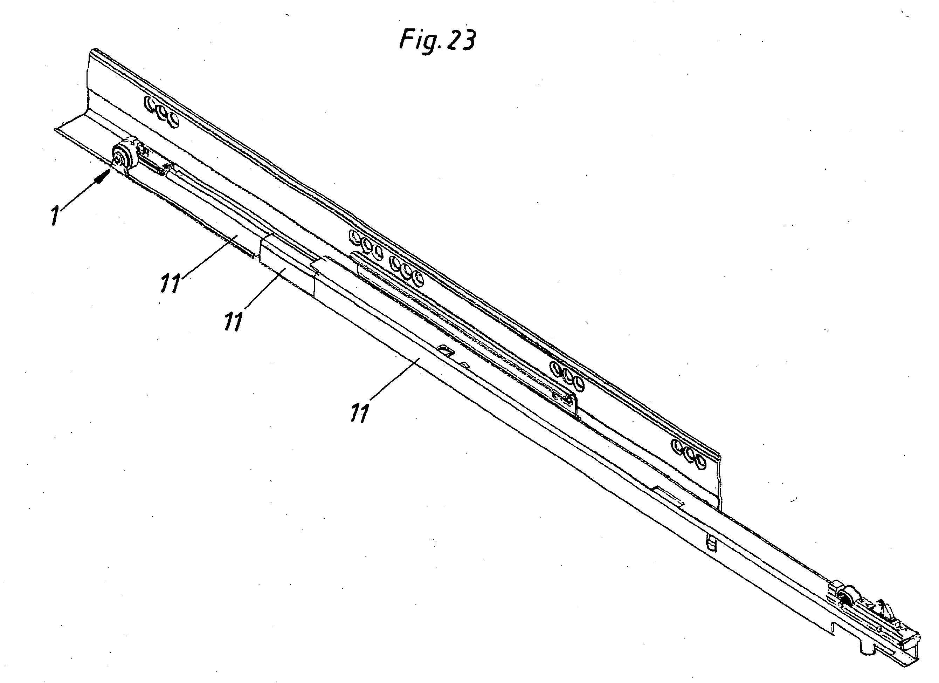

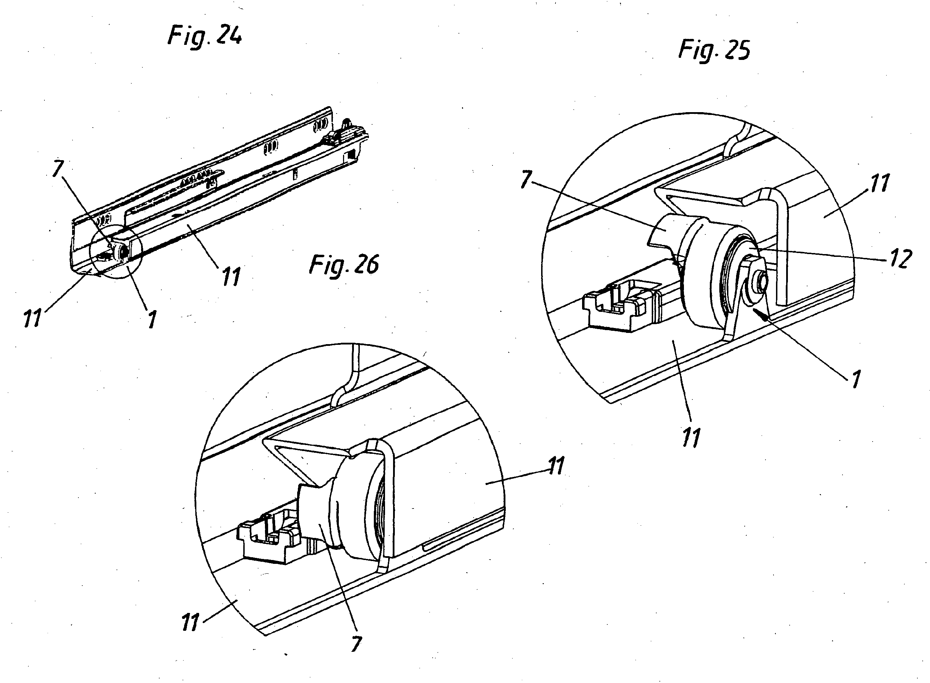

Die Fig. 23 bis 26 zeigen beispielhaft, wie ein erfindungsgemäßer Dämpfer 1 bei einer Schubladenauszugsführung eingesetzt werden kann. Das hier gezeigte Ausführungsbeispiel besteht - wie an sich bekannt - aus drei relativ zueinander verschiebbaren Führungsschienen 11. Vor dem Erreichen der eingeschobenen Endstellung der Schienen 11 wird deren Restgeschwindigkeit mittels des Dämpfers 1 sanft abgedämpft. Fig. 24 zeigt die Schienen 11 am Beginn dieses Dämpfungsvorgangs, an dem eine der Schienen 11 mit einer Schrägfläche auf dem Betätigungselement 7 des Dämpfers auftrifft. Fig. 25 zeigt dies in einer vergrößerten Darstellung. Fig. 26 zeigt die Situation während des Dämpfungshubs in einer Zwischenstellung des Betätigungselementes 7.

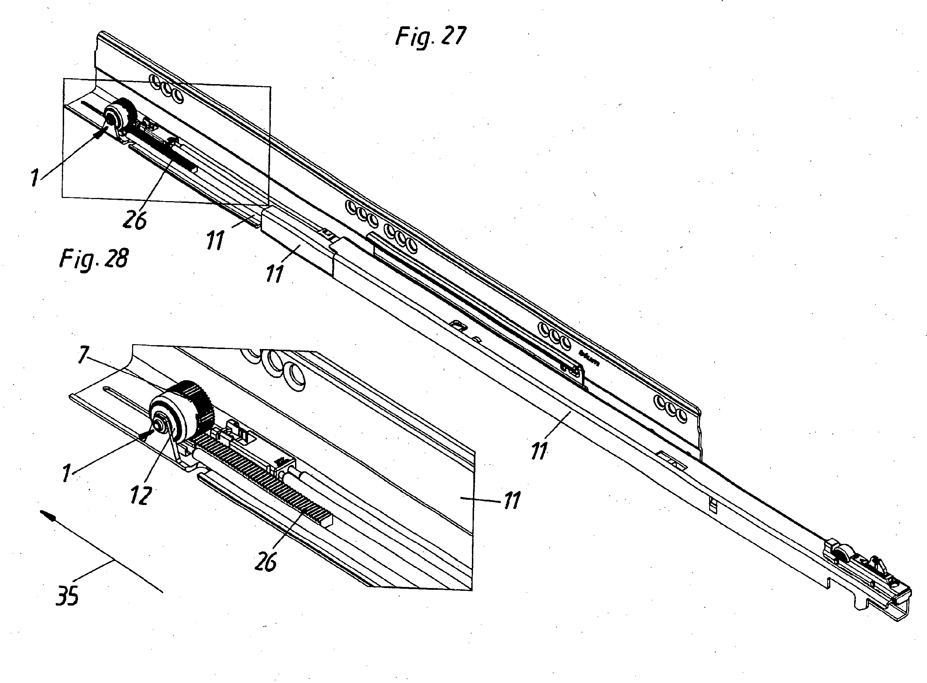

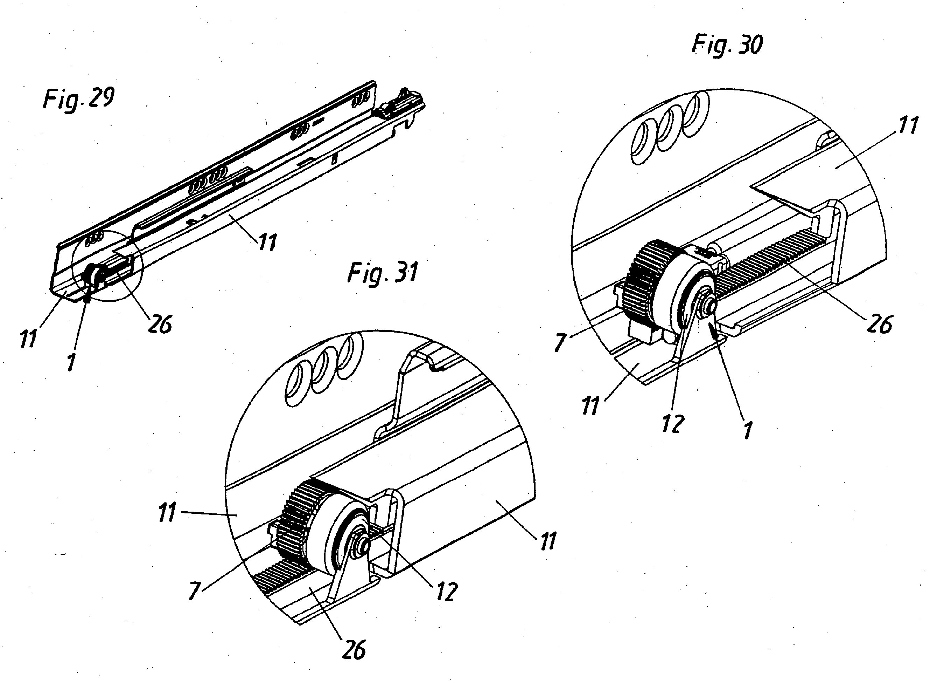

Die Fig. 27 bis 31 zeigen ein zweites Ausführungsbeispiel eines Dämpfers 1 für Schubladenauszugsführungen. Hier ist das Betätigungselement 7 in Form einer Außenverzahnung ausgeführt. In diese greift eine Zahnstange 26 ein, welche wiederum kurz vor der Schließstellung der Schubladenauszugsführung von einer der Führungsschienen 11 beaufschlagt und in Richtung 35 verschoben wird. Die Fig. 29 und 30 zeigen wiederum die Stellung kurz vor Beginn des Dämpfungshubes, bei der die Führungsschiene 11 auf die Zahnstange 26 trifft. Fig. 31 zeigt im Detail eine Situation während des Dämpfungshubes, bei der die Zahnstange 26 bereits ein gutes Stück unter dem Dämpfer 1 hindurchgeschoben worden ist. Zur Rückstellung des Betätigungselementes 7 und der Zahnstange 26 ist im Dämpfer selbst die in den bereits besprochenen Ausführungsbeispielen genannte Rückstellfeder 25 zuständig.

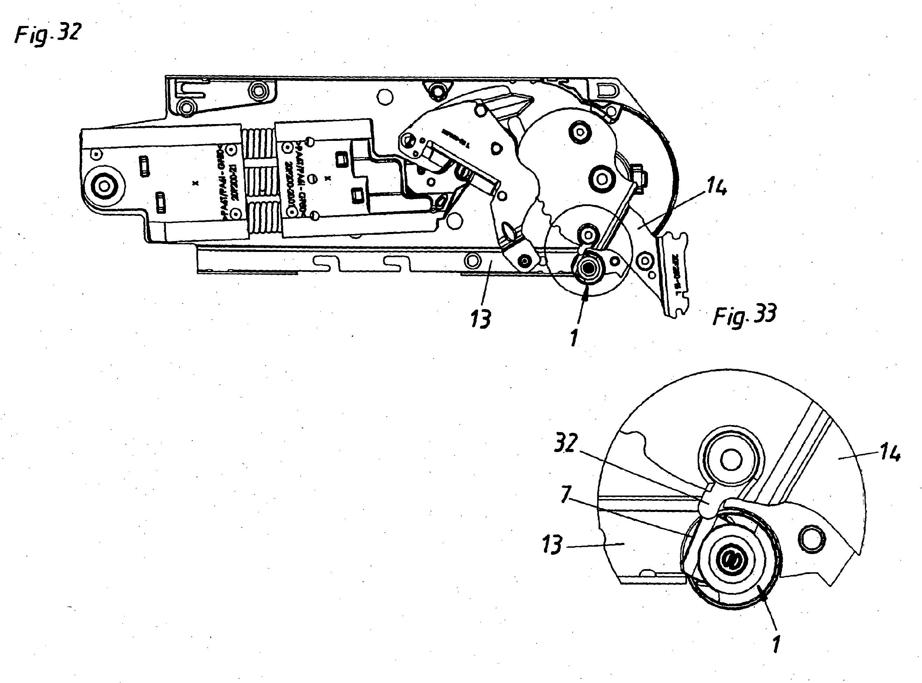

Anhand der Fig. 32 und 33 ist noch ein Ausführungsbeispiel gezeigt, bei dem der Dämpfer 1 zur Dämpfung der Relativbewegung zwischen dem Stellarm 14 und dem Stellarmgelenkgehäuse 13 eines Stellarmgelenks bzw. eines Stellarmantriebs für Hochfaltklappen od. dgl. eingesetzt ist. Im konkret gezeigten Ausführungsbeispiel ist am Stellarm 14 ein Mitnehmerzapfen 32 fixiert, der kurz vor Erreichen der Schließstellung des Stellarmgelenks auf das Betätigungselement 7 des erfindungsgemäßen Dämpfers 1 trifft und ein Drehen des Betätigungselementes 7 hervorruft, wodurch wiederum der Dämpfungshub ausgeführt wird. Freilauf- und Rückstellfunktionen sind wiederum analog wie bei den bisher bereits gezeigten Ausführungsbeispielen realisiert.

Das Rückstellelement kann nicht nur - wie hier explizit gezeigt - als Rückstellfeder sondern z.B. auch als Koppelvorrichtung zum Verbinden mit einem der bewegbaren Möbelteile und/oder Möbelbeschlagteile ausgebildet sein. So kann das Betätigungselement 7 des Dämpfers auch über diese - hier nicht gezeigte - Koppelvorrichtung von dem Gelenkhebel 6 eines Scharniers oder einer Führungsschiene 11 einer Schubladenauszugsführung oder von einem Stellarm 14 eines Stellarmgelenks bei der Rückbewegung des jeweiligen Bauteils mitgenommen werden, um so den Rückstellhub des Dämpfers bzw, des Betätigungselementes 7 zu realisieren.

## Patentansprüche

1. Dämpfer (1) für relativ zueinander bewegbare Möbelteile und/oder Möbelbeschlagbauteile (2, 5, 6, 11, 13, 14) eines Möbelbeschlags, wobei der Dämpfer (1) zumindest zwei bei einem Dämpfungshub relativ zueinander verdrehbar gelagerte Dämpfungsbauteile (8, 9), ein zwischen diesen Dämpfungsbauteilen (8, 9) angeordnetes bzw. wirkendes Dämpfungsmedium, ein Halteteil (12, 27) und eine Arretiereinrichtung sowie mindestens ein zumindest beim Dämpfungshub des Dämpfers (1) mit dem zweiten Dämpfungsbauteil (9) in Wirkverbindung stehendes Betätigungselement (7) aufweist, wobei zwischen dem ersten Dämpfungsbauteil (8) und dem Halteteil (12, 27) die Arretiereinrichtung angeordnet ist, wobei die Arretiereinrichtung beim Dämpfungshub des Dämpfers (1) den ersten Dämpfungsbauteil (8) fest mit dem Halteteil (12, 27) koppelt und wobei die Arretiereinrichtung beim Rückstellhub des Dämpfers (1) den ersten Dämpfungsbauteil (8) zur Realisierung eines Freilaufs vom Halteteil (12, 27) entkoppelt, sodass sich der erste Dämpfungsbauteil (8) beim Rückstellhub des Dämpfers (1) mit dem zweiten Dämpfungsbauteil (9) mitbewegt, **dadurch gekennzeichnet, dass** die Arretiereinrichtung zumindest ein am ersten Dämpfungsbauteil (8) bewegbar gelagertes, in Richtung Arretierstellung über ein Federelement (15) federbelastetes Arretierelement (19) aufweist, das in der Arretierstellung den ersten Dämpfungsbauteil (8) mit dem Halteteil koppelt, wobei das Federelement (15) zwischen dem ersten Dämpfungsbauteil (8) und dem Arretierelement (19) wirkt und wobei das Federelement (15) und das Arretierelement (19) mit dem ersten Dämpfungsbauteil (8) in Drehrichtung mitbewegbar sind, wobei das Arretierelement (19) eine mittels des Federelementes (15) vorgespannte und schwenkbar gelagerte Sperrklinke aufweist.

2. Dämpfer nach Anspruch 1, **dadurch gekennzeichnet, dass** das Halteteil von einem Dämpfergehäuse (12) des Dämpfers (1) oder von einem zentralen Zapfen (27) gebildet ist.

3. Dämpfer nach Anspruch 1 oder 2, **dadurch gekennzeichnet, dass** die Dämpfungsbauteile (8, 9) und das Betätigungselement (7) am Ende des Rückstellhubes ihre Ausgangsposition für den Dämpfungshub erreichen.

4. Dämpfer nach einem der Ansprüche 1 bis 3, **dadurch gekennzeichnet, dass** das Betätigungselement (7) während des Dämpfungshubes und/oder während des Rückstellhubes, vorzugsweise ausschließlich, rotierbar ist.

5. Dämpfer nach einem der Ansprüche 1 bis 4, **dadurch gekennzeichnet, dass** das Betätigungselement (7) und zumindest einer der, vorzugsweise alle, Dämpfungsbauteile (8, 9) um eine gemeinsame Rotationsachse (10) drehbar gelagert sind.

6. Dämpfer nach einem der Ansprüche 1 big 5, **dadurch gekennzeichnet, dass** die Arretiereinrichtung beim Dämpfungshub einen der Dämpfungsbauteile (8, 9) und ein zur Fixierung an nur einem der relativ zueinander bewegbaren Möbelteile und/oder Möbelbeschlagbauteile (2, 5, 6, 11, 13, 14) vorgesehenes Dämpfergehäuse (12) des Dämpfers (1) in der Arretierstellung miteinander arretiert und in der Freilaufstellung das Dämpfungsbauteil (8, 9) und das Dämpfergehäuse (12) für eine Relativbewegung zueinander freigibt.

7. Dämpfer nach einem der Ansprüche 1 bis 6, **dadurch gekennzeichnet, dass** er ein Rückstellelement, vorzugsweise eine Rückstellfeder (25) oder eine Koppelvorrichtung zum Verbinden mit einem der bewegbaren Möbeiteile und/oder Möbeibeschlagteile, für einen Rückstellhub aufweist.

8. Möbelscharnier mit einem Dämpfer nach einem der Ansprüche 1 bis 7.

9. Möbelscharnier nach Anspruch 8, **dadurch gekennzeichnet, dass** ein Gehäuse (12) des Dämpfers (1) an einem ersten Anschlagteil, vorzugsweise einem Scharniertopf (2) des Möbelscharniers, angeordnet, vorzugsweise fixiert, ist und das Betätigungselement (7) von einem zweiten Anschlagteil (5) des Möbelscharniers oder einem Gelenkhebel (6) des Möbelscharniers beaufschlagbar ist.

10. Möbelscharnier nach Anspruch 8 oder 9, **dadurch gekennzeichnet, dass** ein (das) Gehäuse (12) des Dämpfers (1) außen an einem (dem) Scharniertopf (2), vorzugsweise an dessen in Montagestellung seitlicher Außenwand (3) und/oder in Montagestellung unterhalb eines Befestigungsflansches (4) des Scharniertopfes (2), angeordnet ist.

11. Schubladenauszugsführung mit einem Dämpfer nach einem der Ansprüche 1 bis 7.

12. Schubladenauszugsführung nach Anspruch 11 mit zumindest zwei relativ zueinander verschiebbaren Führungsschienen, **dadurch gekennzeichnet, dass** ein Gehäuse (12) des Dämpfers (1) an einer der Führungsschienen (11) angeordnet bzw. fixiert ist und das Betätigungselement (7) des Dämpfers (1) von einer anderen Führungsschiene (11) oder einem durch diese betätigten Zusatzteil (26) beaufschlagbar ist.

13. Stellarmgelenk, insbesondere Stellarmantrieb, für eine Hochfaltklappe oder dergleichen mit einem Dämpfer nach einem der Ansprüche 1 bis 7.

14. Stellarmgelenk nach Anspruch 13 mit einem Stellarmgelenkgehäuse (13) und einem Stellarm (14), **dadurch gekennzeichnet, dass** ein Gehäuse (12) des Dämpfers (1) am Stellarmgelenkgehäuse (13) angeordnet bzw. fixiert ist und das Betätigungselement (7) des Dämpfers von dem Stellarm (14) oder einem durch diesen betätigbaren Zusatzteil (32) beaufschlagbar ist oder umgekehrt.

## Claims

1. A damper (1) for movable furniture parts and/or pieces of furniture fitting parts (2, 5, 6, 11, 13, 14) being movable relative to each other, wherein the damper (1) has at least two damping parts (8, 9) which are pivotally mounted relative to each other in a damping stroke, a damping medium arranged or operative between the damping parts (8, 9), a holding part (12, 27) and an arresting device, at least one actuating element (7) operatively connected to the second damping part (9) at least in the damping stroke of the damper (1), wherein the arresting device is arranged between the first damping part (8) and the holding part (12, 27), wherein the arresting device fixedly couples the first damping part (8) to the holding part (12, 27) in the damping stroke of the damper and wherein the arresting device uncouples the first damping part (8) from the holding part (12, 27) to provide a freewheel relationship in the return stroke of the damper (1) so that the first damping part (8) also moves with the second damping part (9) in the return stroke of the damper (1), **characterised in that** the arresting device has at least one arresting element (16, 19, 38) being movably arranged on the first damping part (8), the arresting element (16, 19, 38) is spring-loaded in the direction of the arresting position by a spring element (15) and couples the first damping part (8) with the holding part in the arresting position, wherein the spring element (15) is operative between the first damping part (8) and the arresting element (19) and wherein the spring element (15) and the arresting element (19) are entrained with the first damping part (8) in a rotation direction, wherein the arresting element (19) has a pivotally mounted pawl which is pre-stressed by the spring element (15).

2. The damper according to claim 1, **characterized in that** the holding part is formed by a damper housing (12) or by a central projection (27).

3. The damper according to claim 1 or 2, **characterized in that** the damping parts (8, 9) and the actuating element (7) reach at the end of the return stroke their starting position for the damping stroke.

4. The damper according to one of the claims 1 to 3, **characterized in that** the actuating element (7) is rotatable, preferably exclusively, during the damping stroke and/or during the return stroke.

5. The damper according to one of the claims 1 to 4, **characterized in that** the actuating element (7) and at least one damping part, preferably all damping parts (8, 9), are pivotally mounted about a common axis of rotation.

6. The damper according to one of the claims 1 to 5, **characterized in that** in the damping stroke, the arresting device arrests one of the damping parts (8, 9) with a damper housing (12) of the damper (1) that is provided for fixing to only one of the mutually relatively movable furniture parts and/or to the pieces of the furniture fittings (2, 5, 6, 11, 13, 14) in the arresting position, and releases the damping part (8, 9) from the damper housing (12) in the freewheel position for a relative movement with respect to each other.

7. The damper according to one of the claims 1 to 6, **characterized in that** the damper (1) has a return element, preferably a return spring (25), or a coupling device for coupling to one of the movable furniture parts and/or the pieces of furniture fittings, for a return stroke.

8. A furniture hinge with a damper according to one of the claims 1 to 7.

9. The furniture hinge according to claim 8, **characterized in that** a housing (12) of the damper (1) is arranged, preferably fixed, on a first abutment part, preferably a hinge cup (2) of the furniture hinge, and the actuating element (7) can be acted upon by a second abutment part (5) of the furniture hinge or by a hinged lever (6) of the furniture hinge.

10. The furniture hinge according to claim 8 or 9, **characterized in that** a (the) housing (12) of the damper (1) is arranged externally on a (the) hinge cup (2), preferably at the outside wall (3) thereof which is lateral in the mounted position, and/or in the mounted position beneath a fixing flange (4) of the hinge cup (2).

11. A drawer pull-out guide with a damper according to one of the claims 1 to 7.

12. The drawer pull-out guide according to claim 11 with at least two guide rails being displaceable relative to each other, **characterized in that** a housing (12) of the damper (1) is arranged on or fixed to one of the guide rails (11) and the actuating element (7) of the damper (1) can be acted upon by another guide rail (11) or by an additional part (26) actuated by said other guide rail.

13. An adjusting arm hinge, in particular an actuating drive, for an upwardly moving folding flap or the like, and with a damper according to one of the claims 1 to 7.

14. The adjusting hinge arm according to claim 13 with an adjusting arm hinge housing (13) and an actuating arm (14), **characterised in that** a housing (12) of the damper (1) is arranged on or fixed to the adjusting arm hinge housing (13) and the actuating element (7) of the damper can be acted upon by the actuating arm (14) or by an additional part (32) actuable therewith, or vice-versa.

## Revendications

1. Amortisseur (1) pour des parties de meubles et/ou composants de ferrures de meubles (2, 5, 6, 11, 13, 14) d'une ferrure de meuble, mobiles les unes par rapport aux autres, l'amortisseur (1) comprenant au moins deux composants d'amortissement (8, 9) logés de manière rotative l'un par rapport à l'autre lors d'une course d'amortissement, un milieu d'amortissement disposé ou agissant entre ces composants d'amortissement (8, 9), une pièce de maintien (12, 27) et un dispositif de blocage ainsi qu'au moins un élément d'actionnement (7) en liaison fonctionnelle avec le deuxième composant d'amortissement (9) lors de la course d'amortissement de l'amortisseur (1), le dispositif de blocage étant disposé entre le premier composant d'amortissement (8) et la pièce de maintien (12, 27), le dispositif de blocage couplant le premier composant d'amortissement (8) de manière fixe avec la pièce de maintien (12, 27) lors de la course d'amortissement de l'amortisseur (1) et le dispositif de blocage découplant le premier composant d'amortissement (8) lors de la course de rappel de l'amortisseur (1) pour la mise en roue libre de la pièce de maintien (12, 27), de façon à ce que le premier composant d'amortissement (8) se déplace avec le deuxième composant d'amortissement (9) lors de la course de rappel de l'amortisseur (1), **caractérisé en ce que** le dispositif de blocage comprend au moins un élément de blocage (19) comprimé par un élément élastique (15) en direction de la position de blocage et logé de manière mobile sur le premier composant d'amortissement (8), qui couple, dans la position de blocage, le premier composant d'amortissement (8) avec la pièce de maintien, l'élément élastique (15) agissant entre le premier composant d'amortissement (8) et l'élément de blocage (19) et l'élément élastique (15) et l'élément de blocage (19) pouvant être déplacés avec le premier composant d'amortissement (8) dans le sens de la rotation, l'élément de blocage (19) comprenant un cliquet de blocage précontraint par l'élément élastique (15) et logé de manière pivotante.

2. Amortisseur selon la revendication 1, **caractérisé en ce que** la pièce de maintien est constituée d'un boîtier d'amortisseur (12) de l'amortisseur (1) ou d'un tenon central (27).

3. Amortisseur selon la revendication 1 ou 2, **caractérisé en ce que** les composants d'amortissement (8, 9) et l'élément d'actionnement (7) atteignent, à l'extrémité de la course de rappel, leur position de départ pour la course d'amortissement.

4. Amortisseur selon l'une des revendications 1 à 3, **caractérisé en ce que** l'élément d'actionnement (7) est rotatif pendant la course d'amortissement et/ou pendant la course de rappel, de préférence exclusivement.

5. Amortisseur selon l'une des revendications 1 à 4, **caractérisé en ce que** l'élément d'actionnement (7) et un des composants d'amortissement (8, 9), de préférence tous, sont logés de manière rotative autour d'un axe de rotation commun (10).

6. Amortisseur selon l'une des revendications 1 à 5, **caractérisé en ce que** le dispositif de blocage bloque entre eux, dans la position de blocage, lors de la course d'amortissement, un des composants d'amortissement (8, 9) et un boîtier d'amortisseur (12) de l'amortisseur (1) prévu pour la fixation sur une seule des parties de meubles et/ou parties de ferrures de meubles (2, 5, 6, 11, 13, 14) mobiles les unes par rapport aux autres et, dans la position de roue libre, libère le composant d'amortissement (8, 9) et le boîtier d'amortisseur (12) pour un mouvement relatif entre eux.

7. Amortisseur selon l'une des revendications 1 à 6, **caractérisé en ce qu'**il comprend un élément de rappel, de préférence un ressort de rappel (25) ou un dispositif d'accouplement pour la liaison avec une des parties de meubles et/ou parties de ferrures de meubles, pour une course de rappel.

8. Charnière de meuble avec un amortisseur selon une des revendications 1 à 7.

9. Charnière de meuble selon la revendication 8, **caractérisée en ce qu'**un boîtier (12) de l'amortisseur (1) est disposé sur un premier élément de butée, de préférence une cuvette de charnière (2) de la charnière du meuble, de préférence fixé, et l'élément d'actionnement (7) peut être mis sous pression par un premier élément de butée (5) de la charnière de meuble ou un levier articulé (6) de la charnière de meuble.

10. Charnière de meuble selon la revendication 8 ou 9, **caractérisée en ce qu'**un (le) boîtier (12) de l'amortisseur (1) est disposé de préférence à l'extérieur d'une (de la) cuvette de charnière (2), de préférence en position de montage sur sa paroi extérieure (3) latérale et/ou en position de montage sous une bride de fixation (4) de la cuvette de charnière (2).

11. Guidage de tiroir avec un amortisseur selon l'une des revendications 1 à 7.

12. Guidage de tiroir selon la revendication 11 avec au moins deux rails de guidage coulissant l'un par rapport à l'autre, **caractérisé en ce qu'**un boîtier (12) de l'amortisseur (1) est disposé ou fixé sur un des rails de guidage (11) et l'élément d'actionnement (7) de l'amortisseur (1) peut être mis sous pression par un autre rail de guidage (11) ou une pièce supplémentaire (26) actionnée par celui-ci.

13. Articulation à bras de réglage, plus particulièrement entraînement à bras de réglage, pour une ferrure pour abattant ou similaire avec un amortisseur selon l'une des revendications 1 à 7.

14. Articulation à bras de réglage selon la revendication 13 avec un boîtier d'articulation à bras de réglage (13) et un bras de réglage (14), **caractérisée en ce qu'**un boîtier (12) de l'amortisseur (1) est disposé ou fixé sur le boîtier d'articulation à bras de réglage (13) et l'élément d'actionnement (7) de l'amortisseur peut être mis sous pression par le bras de réglage (14) ou une pièce supplémentaire (32) actionnable par celui-ci ou inversement.
